# EUROPÄISCHE PATENTSCHRIFT

(11) **EP 2 179 198 B1**
(45) Veröffentlichungstag und Bekanntmachung des Hinweises auf die Patenterteilung: **08.07.2015**
(21) Anmeldenummer: 07846646.3
(22) Anmeldetag: 17.11.2007
(51) Int. Cl.: F16H 48/14

(54) **AUSGLEICHSGETRIEBE**
DIFFERENTIAL GEARING
ENGRENAGE DIFFÉRENTIEL

(30) Priorität: 11.07.2007 DE 102007032630
(43) Veröffentlichungstag der Anmeldung: 28.04.2010
(73) Patentinhaber: MKB Motorenbau GmbH, 71364 Winnenden (DE)
(72) Erfinder: AVRAMIDIS, Panagiotis, 71364 Winnenden (DE); TSIRIGGAKIS, Vasileios, GR-10447 Athen (GR)
(74) Vertreter: Winter, Martina
(86) Internationale Anmeldenummer: PCT/EP2007/009953
(87) Internationale Veröffentlichungsnummer: WO 2009/006929

(56) Entgegenhaltungen:
- DE-A1- 1 817 553
- DE-A1-102004 047 444
- DE-C- 324 822
- DE-C- 741 812
- DE-C- 898 104
- GB-A- 184 916
- US-A- 1 897 555
- US-A- 2 440 975

## Beschreibung

Die vorliegende Erfindung betrifft ein Ausgleichsgetriebe mit zwei einander axial gegenüber stehenden Ausgleichskörpern, die koaxial und relativ zu einem Kraftübertragungselement verdrehbar angeordnet und jeweils fest mit einer Abtriebswelle verbunden sind, jeder Ausgleichskörper mindestens eine radial innere Nockenbahn und eine radial äußere Nockenbahn aufweist und dass zwischen jeder Nockenbahn innere bzw. äußere Gleitsteine bewegbar angeordnet sind.

Ein gattungsgemäßes Ausgleichsgetriebe ist in der deutschen Patentanmeldung DE 10 2004 047 444 A1 bekannt. Bei diesem Ausgleichsgetriebe wirken Rollenkörper zwischen den Ausgleichskörpern. Damit ist das Problem verbunden, dass die Rollenkörper komplex aufgebaut und vergleichsweise voluminös sind, so dass das Ausgleichsgetriebe sehr groß baut.

Ein weiteres Ausgleichsgetriebe ist in der EP 0 619 863 B1 beschrieben. Dieses Ausgleichsgetriebe ist mit einer Vielzahl von Nockenstößeln versehen. Jedoch kann ein derartiges Ausgleichsgetriebe die heutigen Anforderungen an Verschleißfreiheit und Laufruhe nicht erfüllen.

Aus der deutschen Offenlegungsschrift 1 817 553 ist ein selbstsperrendes Ausgleichsgetriebe für Kraftfahrzeuge bekannt, bei dem Gleitbolzen mit Kurvenbahnen zusammenarbeiten. Dabei sind die Kurvenbahnen als Zahnbahnen ausgebildet.

Aus der deutschen Patentschrift 741 812 ist ein Ausgleichsgetriebe bekannt, bei dem jeweils zwei aneinander liegende Gleitsteine mittels Kurvenbahnen gegenläufig bewegt werden.

Aus der deutschen Patentschrift 898 104 ist ein Ausgleichsgetriebe bekannt, bei dem Übertragungsrollen zwischen Zahnkränzen bewegt werden.

Die Aufgabe der vorliegenden Erfindung besteht somit darin, das gattungsgemäße Ausgleichsgetriebe so weiter zu entwickeln, dass nicht nur die angestrebten Ziele, die Reibung zu vermindern und ruhige Laufeigenschaften zu gewährleisten, in zufrieden stellender Weise erreicht werden, sondern dass das Ausgleichsgetriebe auch kleiner baut, so dass es in gängigen Serienfahrzeugen verwendet werden kann.

Die Lösung besteht in einem Ausgleichsgetriebe mit den Merkmalen des Patentanspruchs 1. Erfindungsgemäß ist vorgesehen, dass die Nockenbahnen als eine Aneinanderreihung von schiefen Ebenen ausgebildet sind, die in ihren Maxima und Minima einen definierten stumpfen Winkel (β) einschließen, dass in jeder Nockenbahn (30, 32) über den Bereich von 360° wechselweise jeweils zwei Maxima (40) und zwei Minima (42) sowie vier Gleitsteine (20, 22) vorgesehen sind und dass die Gleitsteine (20, 22) auf ihren den Nockenbahnen (30, 32) zugewandten Enden jeweils zwei Führungsflächen aufweisen, die den gleichen definierten stumpfen Winkel (β) einschließen wie die Maxima und Minima der schiefen Ebenen der Nockenbahnen.

Die für den Fachmann überraschende Erkenntnis besteht somit darin, dass die im Stand der Technik notwendigen Rollkörper problemlos durch Gleitsteine ersetzt werden können, die ohne weitere zusätzliche konstruktive Maßnahmen oder Mittel frei bewegbar zwischen den Ausgleichskörpern angeordnet werden können. Da die Gleitsteine auf ihren den Nockenbahnen zugewandten Enden erfindungsgemäß jeweils zwei Führungsflächen aufweisen, die den gleichen definierten stumpfen Winkel einschließen wie die Maxima und Minima der schiefen Ebenen der Nockenbahnen, wird das Zusammenspiel zwischen Gleitsteinen und Nockenbahn optimiert. Dies ist darauf zurückzuführen, dass die Gleitsteine mit einer besonders groß bemessenen Fläche an den Nockenbahnen anliegen, wodurch Klappergeräusche vermieden werden.

Im Gegensatz zu den bisher verwendeten Rollkörpern sind keine Führungselemente mehr notwendig, so dass eine Vielzahl von Bauteilen entfällt. Somit ist das erfindungsgemäße Ausgleichsgetriebe besonders einfach aufgebaut, so dass es wesentlich zuverlässiger funktioniert als die im Stand der Technik bekannten Ausgleichsgetriebe. Außerdem erlaubt der einfache Aufbau mit einer deutlich geringeren Anzahl von Bauteilen eine sehr kleine, kompakte Bauweise des erfindungsgemäßen Ausgleichsgetriebes. Insbesondere die erfindungsgemäß aufgebauten Nockenbahnen sind besonders einfach herzustellen. Das erfindungsgemäße Ausgleichsgetriebe ist nun in allen gängigen Serienfahrzeugen einsetzbar. Schließlich gewährleisten die alternierende Anordnung von jeweils zwei Maxima und zwei Minima über den Bereich von 360° sowie die Verwendung von genau vier Gleitsteinen in jeder Nockenbahn des erfindungsgemäßen Ausgleichsgetriebes einen geringen Verschleiß und ruhige und ruckfreie Laufeigenschaften.

Vorteilhafte Weiterbildungen ergeben sich aus den Unteransprüchen.

Die Ausgleichskörper können identisch ausgebildet sein, wodurch die Fertigung vereinfacht wird.

In einer bevorzugten Ausführungsform ist die Oberfläche jeder Nockenbahn senkrecht zur Drehachse der Abtriebswellen angeordnet. Dadurch wird ein besonders reibungsarmer Betrieb gewährleistet. Die Oberflächen der Nockenbahnen können aber auch durchaus eine leichte Schrägestellung aufweisen; wichtig ist dabei, dass die Oberflächen selbst parallel zueinander verlaufen.

In vorteilhafter Weise sollte die äußere Nockenbahn gegenüber der inneren Nockenbahn phasenverschoben angeordnet sein.

Der Höhenunterschied innerhalb einer Nockenbahn kann beliebig hoch sein. Mit dem Höhenunterschied wird der Wirkungsgrad des Drehzahlausgleichs des erfindungsgemäßen Ausgleichsgetriebes beeinflusst. Der Höhenunterschied hängt somit von den Anforderungen an das Ausgleichsgetriebe im Einzelfall ab. In einem Serienfahrzeug kann der Höhenunterschied bspw. größer gewählt werden, um einen effektiven Drehzahlausgleich zu erzielen, während in einem Rennfahrzeug ein geringerer Höhenunterschied gewählt werden kann, um mehr Vortrieb zu erhalten.

Selbstverständlich können neben der inneren und der äußeren Nockenbahn eine oder mehrere zusätzliche, zwischen denselben angeordnete, Nockenbahnen vorgesehen sein, zwischen denen jeweils mindestens zwei Gleitsteine aufgenommen sind.

Die Gleitsteine können im Kraftübertragungselement ausgebildeten Ausnehmungen aufgenommen sein, so dass das erfindungsgemäße Ausgleichsgetriebe besonders kompakt baut und einfach herzustellen ist. Eine vergleichbare Wirkung wird erzielt, wenn jeweils ein innerer Gleitstein und ein äußerer Gleitstein aneinander liegen. Dann können die aneinander liegenden Gleitsteine in einer im Kraftübertragungselement ausgebildeten gemeinsamen Ausnehmung aufgenommen sein.

Ausführungsbeispiele der vorliegenden Erfindung werden im Folgenden anhand der beigefügten Zeichnungen näher beschrieben. Es zeigen in schematischer, nicht maßstabsgerechter Darstellung:
- Figur 1: einen Schnitt durch ein erstes Ausführungsbeispiel eines erfindungsgemäßen Ausgleichsgetriebes;
- Figur 2: einen Schnitt entlang der Linie II - II in Figur 1;
- Figur 3: eine Seitenansicht auf einen Ausgleichskörper;
- Figur 4: eine Draufsicht auf die Nockenbahnen eines Ausgleichskörpers;
- Figur 5: eine Seitenansicht der Abwicklung der Nockenbahnen zweier Ausgleichskörper in sperrender und in neutraler Stellung;
- Figur 6: ein weiteres Ausführungsbeispiel eines erfindungsgemäßen Ausgleichsgetriebes in einer Darstellung gemäß Figur 2.

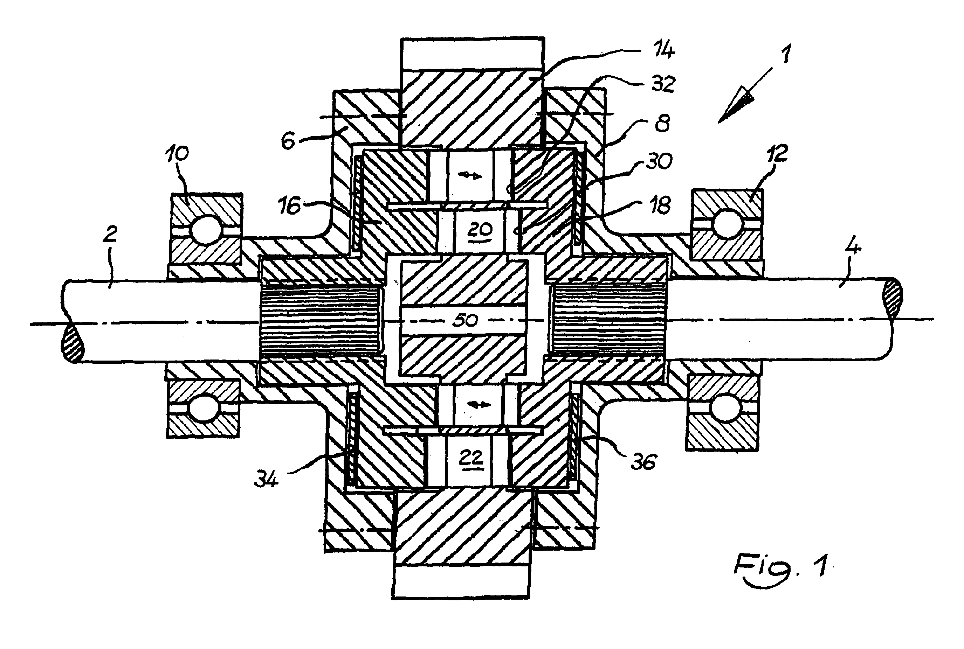

Die Figuren 1 bis 3 zeigen ein Ausführungsbeispiel eines erfindungsgemäßen Ausgleichsgetriebes 1. Ein derartiges Ausgleichsgetriebe dient dazu, an einem Kraftfahrzeug die unterschiedlichen Drehzahlen zweier auf gemeinsam angetriebenen Achsen sitzenden Räder aus zugleichen, die Leistung auf beide Räder gleichmäßig zu übertragen und ein Durchdrehen eines Rades zu vermeiden.

Das Ausgleichsgetriebe 1 weist zwei fluchtend angeordnete Abtriebswellen 2, 4 auf, die jeweils in einem Gehäuse 6 bzw. 8 mittels Kugellagern 12 bzw. 10 gelagert sind. Die beiden

Gehäuse 6, 8 sind fest mit einem mit einer Nabe 50 versehenen Antriebsrad 14 verbunden, in dessen Inneren die Bauteile des Ausgleichsgetriebes 1 angeordnet sind.

Die Enden der Abtriebswellen 2, 4 sind jeweils fest mit einem Ausgleichskörper 16 bzw. 18 verbunden. Die beiden Ausgleichskörper 16, 18 sind mit einer inneren Nockenbahn 30 und einer äußeren Nockenbahn 32 versehen. Im Ausführungsbeispiel ist die Oberfläche 38 jeder Nockenbahn 30, 32 senkrecht zur Drehachse der Abtriebswellen 2, 4 angeordnet. Selbstverständlich können, anders als im Ausführungsbeispiel dargestellt, neben der inneren und der äußeren Nockenbahn 30 bzw. 32 eine oder mehrere zusätzliche, zwischen denselben angeordnete Nockenbahnen vorgesehen sein.

Zwischen diesen Nockenbahnen 30, 32 der einander axial gegenüberliegenden Ausgleichskörper 16, 18 sind innere Gleitsteine 20 bzw. äußere Gleitsteine 22 angeordnet. Die Gleitsteine 20, 22 sind in im Antriebsrad 14 ausgebildeten innere Ausnehmungen 24 bzw. äußere Ausnehmungen 26 aufgenommen. Erfindungsgemäß sind pro Nockenbahn vier Gleitsteine 20, 22 vorgesehen, da sich diese Anzahl als besonders praktikabel erwiesen hat. Ferner sind im Ausführungsbeispiel die inneren Gleitsteine 20 und die äußeren Gleitsteine 22 in separaten Ausnehmungen 24 bzw. 26 aufgenommen. Jeweils ein innerer Gleitstein 20 und ein korrespondierender äußerer Gleitstein 22 können aber auch aneinander liegend angeordnet sein. Dann können diese beiden aneinander liegenden Gleitsteine in einer im Antriebsrad 14 ausgebildeten gemeinsamen Ausnehmung aufgenommen sein (nicht dargestellt).

Zwischen den Ausgleichskörpern 16, 18 und den Gehäusen 6, 8 sind Ringscheiben 34, 36 angeordnet, die die Gleitfähigkeit zwischen diesen Bauteilen verbessern und zu diesem Zweck mit Ölnuten versehen sind (nicht dargestellt).

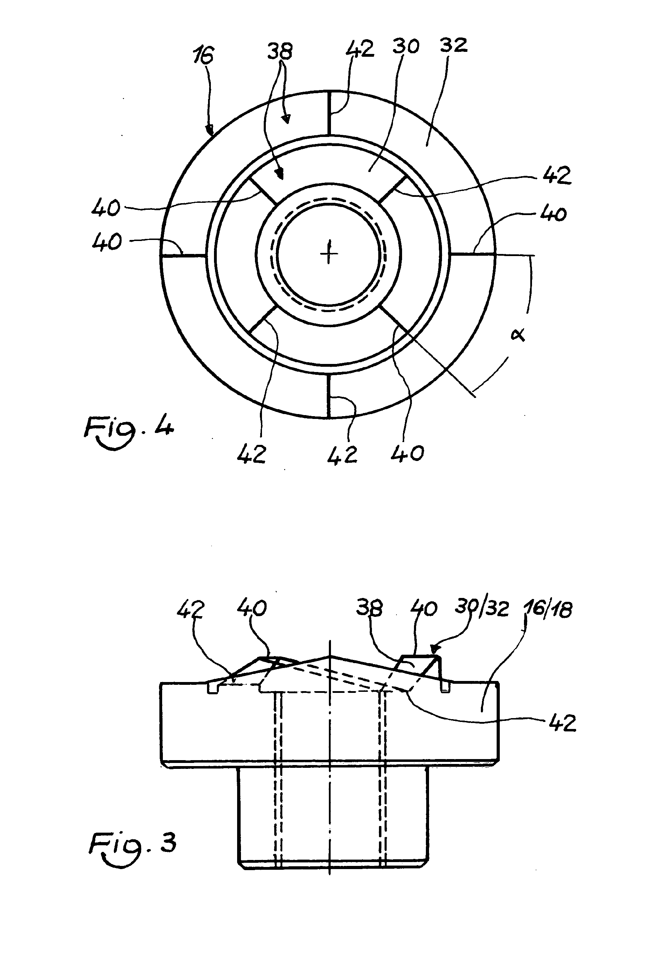

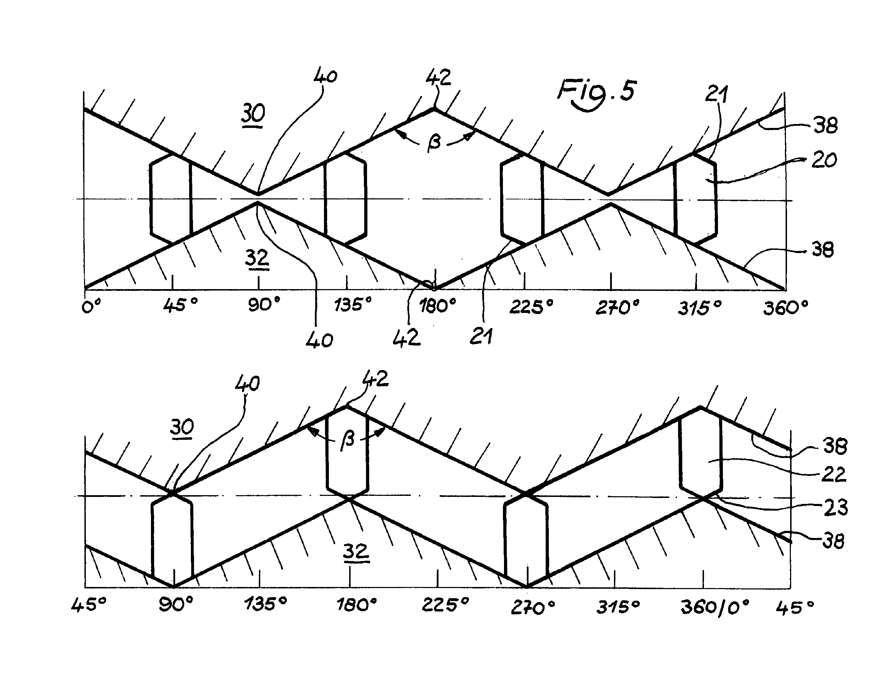

Die Anordnung der Nockenbahnen 30, 32 zueinander sowie ihr Zusammenspiel mit den Gleitsteinen 20, 22 sind in den Figuren 4 und 5 dargestellt. Figur 4 zeigt die Anordnung der inneren Nockenbahn 30 und der äußeren Nockenbahn 32 relativ zueinander. Die Nockenbahnen 30, 32 weisen Maxima 40 und Minima 42 auf, und zwar im Ausführungsbeispiel jeweils zwei Maxima 40 und zwei Minima 42, da vier Gleitsteine 20 bzw. 22 pro Nockenbahn 30 bzw. 32 vorhanden sind. Es ist zu erkennen, dass die Maxima 40 und die Minima 42 der inneren Nockenbahn 30 um einen Winkel α = 45° gegeneinander versetzt zu den Maxima 40 und Minima 42 der äußeren Nockenbahn 42 angeordnet sind. Diese Ausgestaltung der Nockenbahnen 30, 32 gewährleistet einen besonders geringen Reibungsverschleiß und einen äußerst ruhigen, ruckfreien Lauf.

Aus den Abwicklungen der Nockenbahnen 30, 32 von 0° bis 360°, wie sie in Figur 5 dargestellt sind, ist deutlich zu erkennen, dass die Nockenbahnen 30, 32 als eine Aneinanderreihung von schiefen Ebenen ausgebildet sind, die in ihren Maxima 40 und Minima 42 einen definierten, jedoch gemäß den Anforderungen des Einzelfalls frei wählbaren Winkel β einschließen. Die Gleitsteine 20, 22 weisen auf ihren den Nockenbahnen 30, 32 zugewandten Enden jeweils zwei Führungsflächen 21 bzw. 23 auf, die den gleichen definierten Winkel β einschließen wie die Maxima 40 und Minima 42 der schiefen Ebenen der Nockenbahnen 30, 32. Damit wird das Zusammenspiel von Gleitsteinen 20, 32 und Nockenbahnen 30, 32 weiter verbessert. Im Gegensatz hierzu würden Gleitsteine mit abgerundeten Enden die Nockenbahnen 30, 32 lediglich entlang einer Linie berühren, was je nach den Umständen des Einzelfalls, bspw. bei geringerer Kraftübertragung, genügen kann.

Aus Figur 5 ergibt sich weiter, dass durch die in Figur 4 dargestellte Anordnung der Nockenbahnen 30, 32 relativ zueinander immer ein Nockenbahnpaar 30 oder 32 in einer sperrenden Stellung steht (obere Darstellung), während das andere Nockenpaar 32 oder 30 immer in einer neutralen Stellung steht (untere Darstellung). Dadurch ist gewährleistet, dass stets eine Kraftübertragung vom Antriebsrad 14 auf die Abtriebsachsen 2, 4 und damit bspw. auf die Antriebsräder eines Kraftfahrzeugs stattfindet. Unterschiedliche Drehgeschwindigkeiten der Antriebsräder werden ausgeglichen.

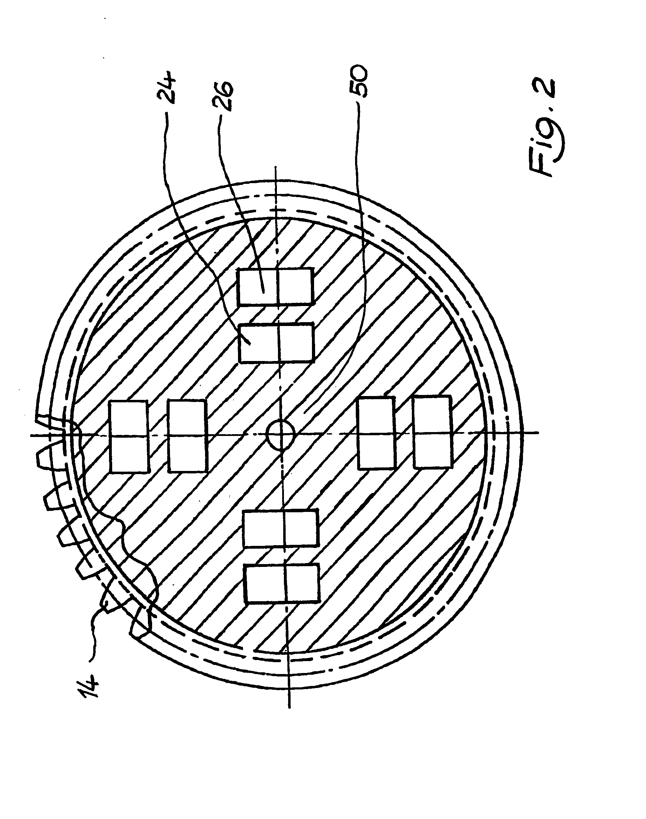

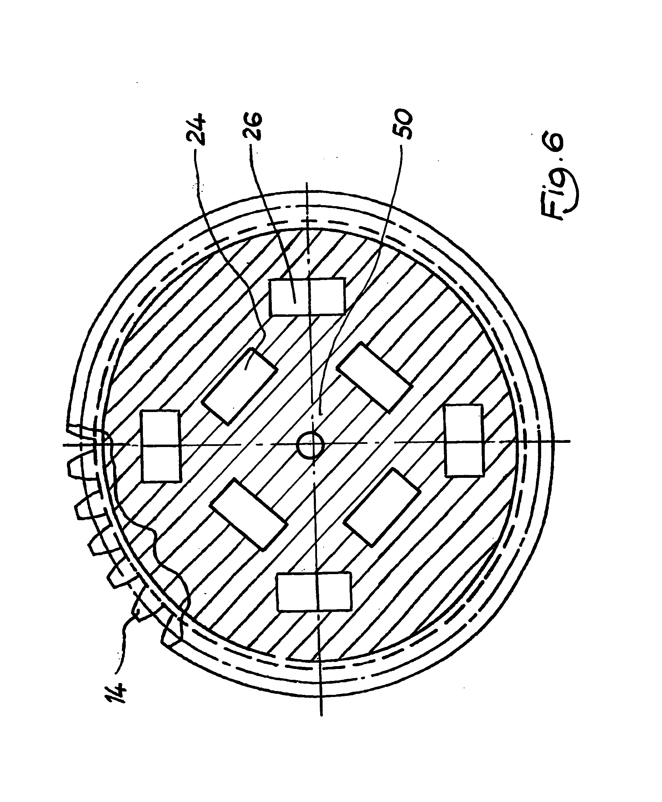

Figur 6 zeigt ein weiteres Ausführungsbeispiel eines erfindungsgemäßen Ausgleichsgetriebes in einer Darstellung gemäß Figur 2. In diesem Ausführungsbeispiel sind die äußeren Gleitsteine 22 und die inneren Gleitsteine 20 um 45° gegeneinander versetzt. Daher sind die Ausnehmungen 24, 26 im Antriebsrad 14 für die Lagerung der Gleitsteine 20, 22 ebenfalls um 45° gegeneinander versetzt, wie aus Figur 6 zu entnehmen ist. Dementsprechend sind die Maximal 40 und Minima 42 der Nockenbahnen 30 bzw. 32 nicht auch noch um 45° versetzt, sondern einander radial benachbart, um wie oben beschrieben stets eine Kraftübertragung vom Antriebsrad 14 auf die Abtriebsachsen 2, 4 zu bewirken (nicht dargestellt).

## Patentansprüche

1. Ausgleichsgetriebe (1), mit zwei einander axial gegenüber stehenden Ausgleichskörpern (16, 18), die koaxial und relativ zu einem Kraftübertragungselement (14) verdrehbar angeordnet und jeweils fest mit einer Abtriebswelle (2,4) verbunden sind, jeder Ausgleichskörper (16, 18) mindestens eine radial innere Nockenbahn (30) und eine radial äußere Nockenbahn (32) aufweist und dass zwischen jeder Nockenbahn (30, 32) innere bzw. äußere Gleitsteine (20, 22) bewegbar angeordnet sind, **dadurch gekennzeichnet, dass** die Nockenbahnen (30, 32) als eine Aneinanderreihung von schiefen Ebenen ausgebildet sind, die in ihren Maxima (40) und Minima (42) einen definierten stumpfen Winkel (β) einschließen, dass in jeder Nockenbahn (30, 32) über den Bereich von 360° wechselweise jeweils zwei Maxima (40) und zwei Minima (42) sowie vier Gleitsteine (20, 22) vorgesehen sind und dass die Gleitsteine (20, 22) auf ihren den Nockenbahnen (30, 32) zugewandten Enden jeweils zwei Führungsflächen aufweisen, die den gleichen definierten stumpfen Winkel (β) einschließen wie die Maxima und Minima der schiefen Ebenen der Nockenbahnen.

2. Ausgleichsgetriebe nach Anspruch 1, **dadurch gekennzeichnet, dass** jeweils ein innerer Gleitstein (20) und ein äußerer Gleitstein (22) aneinander liegen und dass die aneinander liegenden Gleitsteine in einer im Kraftübertragungselement (14) ausgebildeten gemeinsamen Ausnehmung aufgenommen sind.

3. Ausgleichsgetriebe nach Anspruch 1 oder 2, **dadurch gekennzeichnet, dass** die sich gegenüberliegenden Ausgleichskörper (16, 18) identisch ausgebildet sind.

4. Ausgleichsgetriebe nach einem der vorhergehenden Ansprüche, **dadurch gekennzeichnet, dass** die Oberfläche jeder Nockenbahn (30, 32) senkrecht zur Drehachse der Abtriebswellen (2, 4) angeordnet ist.

5. Ausgleichsgetriebe nach einem der vorhergehenden Ansprüche, **dadurch gekennzeichnet, dass** die radial äußere Nockenbahn (32) gegenüber der radial inneren Nockenbahn (30) phasenverschoben angeordnet ist.

6. Ausgleichsgetriebe nach einem der vorhergehenden Ansprüche, **dadurch gekennzeichnet, dass** die Gleitsteine (20, 22) auf ihren den Nockenbahnen (30, 32) zugewandten Enden Führungsflächen aufweisen.

## Claims

1. An equalisation gear (1), having two mutually axially opposite equalisation bodies (16, 18), which are arranged coaxially such that they can rotate relative to a force transmission element (14) and are each connected fixedly to an output shaft (2, 4), each equalisation body (16, 18) having at least one radially inner cam track (30) and one radially outer cam track (32), and inner and outer sliding blocks (20, 22) being movably arranged between each cam track (30, 32), **characterised in that** the cam tracks (30, 32) are formed as a series of oblique planes, which enclose a defined obtuse angle (β) in their maxima (40) and minima (42), that two maxima (40) and two minima (42) are provided alternately over the 360° range, as well as four sliding blocks (20, 22) are provided in each cam track (30, 32), and that the sliding blocks (20, 22) have on each of their ends facing the cam tracks (30, 32) two guide faces, which enclose the same defined obtuse angle (β) as the maxima and minima of the oblique planes of the cam tracks.

2. The equalisation gear according to Claim 1, **characterised in that** in each case an inner sliding block (20) and an outer sliding block (22) bear against each other, and that the sliding blocks that bear against each other are accommodated in a common cut-out formed in the force transmission element (14).

3. The equalisation gear according to Claim 1 or 2, **characterised in that** the mutually opposite equalisation bodies (16, 18) are identical.

4. The equalisation gear according to any one of the preceding claims, **characterised in that** the surface of each cam track (30, 32) is arranged perpendicularly to the rotation axis of the output shafts (2, 4).

5. The equalisation gear according to any one of the preceding claims, **characterised in that** the radially outer cam track (32) is arranged such that it is phase-shifted in relation to the radially inner cam track (30).

6. The equalisation gear according to any one of the preceding claims, **characterised in that** the sliding blocks (20, 22) have guide faces on their ends facing the cam tracks (30, 32).

## Revendications

1. Différentiel (1) avec deux corps de compensation (16, 18) opposés axialement l'un à l'autre qui sont disposés capables de tourner coaxialement et par rapport à un élément de transmission de force (14) et sont respectivement fermement reliés à un arbre de transmission (2, 4), chaque corps de compensation (16, 18) comportant au moins une portée de came (30) radialement intérieure et une portée de came (32) radialement extérieure et en ce qu'entre chaque portée de came (30, 32) sont disposés des coulisseaux (20, 22) intérieur ou extérieur pouvant être mobiles, **caractérisé en ce que** les portées de came (30, 32) sont constituées comme une juxtaposition de plans inclinés qui comprennent un angle obtus (β) défini dans leurs maxima (40) et minima (42), **en ce que** dans chaque portée de came (30, 32) sont alternativement prévus sur le secteur de 360° à chaque fois deux maxima (40) et deux minima (42) ainsi que quatre coulisseaux (20, 22) et **en ce que** les coulisseaux (20, 22) comportent respectivement deux surfaces de guidage sur leurs extrémités tournées vers les portées de came (30, 32), qui comprennent le même angle obtus (β) défini que les maxima et minima des plans inclinés des portées de came.

2. Différentiel selon la revendication 1, **caractérisé en ce qu'**à chaque fois un coulisseau intérieur (20) et un coulisseau extérieur (22) sont contigus et **en ce que** les coulisseaux contigus sont logés dans un évidement commun constitué dans un élément de transmission de force (14).

3. Différentiel selon la revendication 1 ou 2, **caractérisé en ce que** les corps de compensation opposés (16, 18) sont constitués de façon identique.

4. Différentiel selon l'une quelconque des revendications précédentes, **caractérisé en ce que** la surface de chaque portée de came (30, 32) est disposée perpendiculairement à l'axe de rotation de l'arbre de transmission (2, 4).

5. Différentiel selon l'une quelconque des revendications précédentes, **caractérisé en ce que** la portée de came (32) radialement extérieure est disposée en décalage de phase vis-à-vis de la portée de came (30).

6. Différentiel selon l'une quelconque des revendications précédentes, **caractérisé en ce que** les coulisseaux (20, 22) comportent des surfaces de guidage sur leurs extrémités tournées vers les portées de came (30, 32).
